# EUROPEAN PATENT APPLICATION

(11) **EP 4 783 139 A1**
(43) Date of publication of application: **29.07.2026**
(21) Application number: 26153793.0
(22) Date of filing: 23.01.2026
(51) Int. Cl.: G07C 9/00, G05B 15/02, G07C 9/27

(54) **CONFIGURING A RESTRICTED PHYSICAL SPACE**

(30) Priority: 27.01.2025 US 202519037511
(71) Applicant: ASSA ABLOY AB, 107 23 Stockholm (SE)
(72) Inventor: NORDBECK, Per, Redmond, 98052 (US)
(74) Representative: Kransell & Wennborg KB

(57) **Abstract**

It is provided a method for configuring a restricted physical space (16, 16a-g). The method is performed by a configuration determiner (1). The method comprises: determining (40) an identity of a user (5a, 5b) associated with a restricted physical space (16, 16a-g); determining (42) a presence space configuration based on the identity of the user (5a, 5b); and sending (46) a first configuration signal to actuate at least part of the presence space configuration in the restricted physical space (16, 16a-g).

## Description

### TECHNICAL FIELD

The present disclosure relates to the field of restricted physical spaces, and in particular to configuring a restricted physical space based on an identity of a user associated with the restricted physical space.

### BACKGROUND

In many controlled environments, such as hotels, cruise ships, offices, and other facilities, spaces are often configured to suit varying operational or occupancy needs. Configuring such spaces typically involves managing adjustable elements such as lighting, climate control, window coverings, and access controls. These elements can enhance user comfort, improve energy efficiency, and streamline building management operations when configured appropriately.

Automated solutions have been developed to apply configurations by detecting user presence or activity in the space. For example, some hotel rooms use a key card holder near the entrance that triggers certain configurations, such as activating the room's air conditioning or lighting, only when a card is inserted. Similarly, motion sensors have been used in office spaces to activate lights or climate systems when movement is detected, and to deactivate these systems after a certain period of inactivity. These approaches reduce energy consumption and ensure that resources are only utilized when the space is in use.

However, existing approaches lack flexibility. Many systems rely on fixed triggers, such as the insertion of a key card or the detection of motion, which can result in limited adaptability. For instance, a motion sensor may fail to detect occupancy if a person is stationary, leading to unintended deactivation of lighting or climate controls. Conversely, some systems may remain active unnecessarily, such as when a key card is left in the holder while the space is unoccupied. These rigid methods often fail to account for varying conditions or operational requirements.

As controlled environments become more complex, particularly in multi-use facilities like hotels, cruise ships, and office buildings, there is a growing need for more robust and adaptable solutions. These solutions should enable the coordination of multiple adjustable elements within a space, to ensure efficient use of energy and resources. Overcoming the inflexibility of existing approaches would not only improve operational efficiency but also align with broader goals of sustainability and energy conservation.

### SUMMARY

One object is to improve the flexibility and energy efficiency in configuring restricted spaces.

According to a first aspect, it is provided a method for configuring a restricted physical space. The method is performed by a configuration determiner. The method comprises: determining an identity of a user associated with a restricted physical space; determining a presence space configuration based on the identity of the user; and sending a first configuration signal to actuate at least part of the presence space configuration in the restricted physical space.

The determining an identity of the user may comprise determining the identity of the user based on the user unlocking an electronic lock associated with the restricted physical space using a credential of the user.

The method may further comprise: sending, based on detecting that the user has left the restricted physical space, a low-energy configuration signal to actuate an absence space configuration in the restricted physical space, that results in lower energy use for the restricted physical space than the presence space configuration.

The detecting that the user has left the restricted physical space may be based on detecting a use of the credential in another location than the electronic lock associated with the restricted physical space.

At least one of the presence space configuration and the absence space configuration may comprise a lighting configuration for the restricted physical space.

At least one of the presence space configuration and the absence space configuration may comprise a window cover configuration for the restricted physical space.

At least one of the presence space configuration and the absence space configuration may comprise a climate control configuration for the restricted physical space.

The first configuration signal may cause the climate control configuration to be activated for the restricted physical space. In this case the method further comprises: detecting, after the determining the identity of the user, that the restricted physical space is unlocked by the user; and sending, based on detecting that the restricted physical space is unlocked by the user, a second configuration signal to actuate the lighting configuration and/or the window cover configuration.

The determining an identity of the user may comprise determining that the user has entered a building containing the restricted physical space.

The first configuration signal may cause a lift to move to the entrance floor of the building.

The method may further comprise: updating the presence space configuration for the user based on manual adjustments made to the configuration of the restricted physical space.

The updating the presence space configuration may comprise training a machine-learning model for the presence space configuration.

The determining the identity of the user may be based on a user device of the user being detected in the building containing the restricted physical space, and determining the identity of the user based on an identity of the user device.

The method may further comprise: transmitting a message to the user device, indicating that the restricted physical space is being prepared for the user.

According to a second aspect, it is provided a configuration determiner for configuring a restricted physical space. The configuration determiner comprises: processing circuitry; and memory circuitry storing instructions that, when executed by the processing circuitry, cause the configuration determiner to: determine an identity of a user associated with a restricted physical space; determine a presence space configuration based on the identity of the user; and send a first configuration signal to actuate at least part of the presence space configuration in the restricted physical space.

According to a third aspect, it is provided a computer program for configuring a restricted physical space. The computer program comprises computer program code which, when executed on a configuration determiner, causes the configuration determiner to: determine an identity of a user associated with a restricted physical space; determine a presence space configuration based on the identity of the user; and send a first configuration signal to actuate at least part of the presence space configuration in the restricted physical space.

According to a fourth aspect, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 is a schematic diagram illustrating an environment in which embodiments presented herein can be applied.
Fig. 2 illustrates a schematic view of an embodiment of a restricted physical space, such as a room within a building in the environment of Fig 1;
Fig. 3 is a flow chart illustrating embodiments of methods for configuring a restricted physical space;
Fig 4 is a schematic diagram illustrating components of the configuration determiner of Fig 1; and
Fig 5 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, it is provided a solution for dynamically configuring a restricted physical space based on user identity. This involves determining the identity of a user associated with the space, determining a personalized presence space configuration based on this identity, and sending configuration signals to actuate various elements such as lighting, climate control, and window coverings. The configuration adapts to user-specific preferences for when the user is present in the restricted physical space, and when the user exits the space, a low-energy configuration can optionally be implemented to conserve energy. Additional optional features include detecting user entry into a building and/or updating configurations based on manual adjustments or machine learning. The provided solution enhances user convenience and personalization, while providing this in an energy efficiency manner.

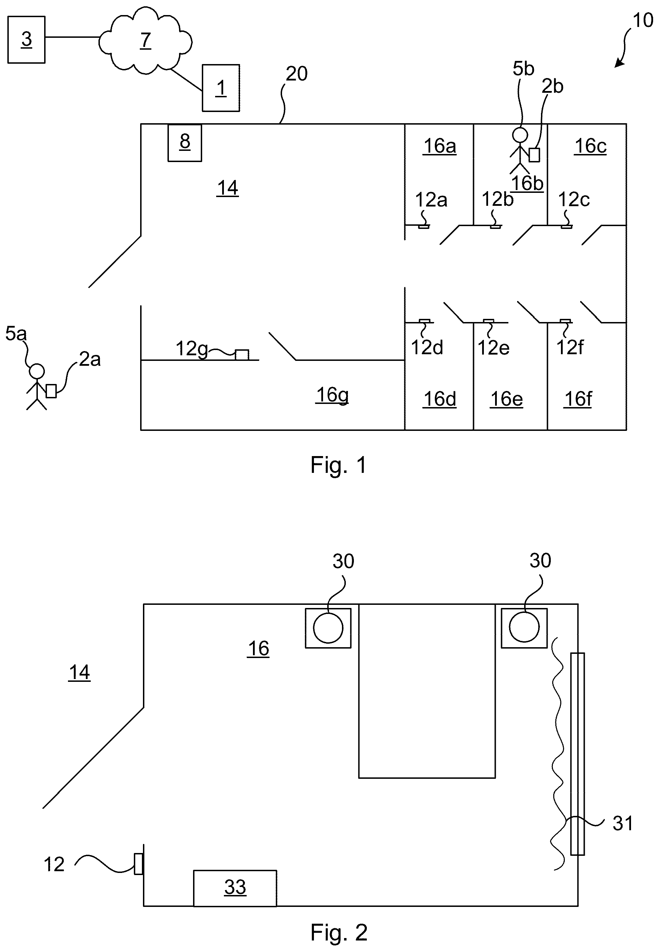

Fig. 1 is a schematic diagram illustrating an environment in which embodiments presented herein can be applied. A building 10 comprises a number of restricted physical spaces 16a-g. The building 10 can be, for example, in the form of a hotel, a cruise ship, or a residential property, such as a college dormitory, comprising restricted spaces 16a-g, each of which can be associated with a respective user. Each restricted physical space 16a-g can be any space for which access is restricted. For instance the restricted space 16a-g can be in the form of a hotel room, cruise ship cabin, meeting room, dormitory room, flat, lift, spa, gym, etc. Electronic locks 12a-g are provided, securing access to respective restricted physical spaces 16a-g by selectively locking or unlocking respective doors. Each electronic lock 12a-g can interact with an electronic key to evaluate access. The electronic key can be in any suitable format that allows an electronic lock to communicate (wirelessly or conductively) with the electronic key to evaluate whether to grant access. For instance, the electronic key can be in the form of a key fob, a key card, a hybrid mechanical/electronic key, or be embedded in a user device, such as a smartphone or wearable device. Depending on the access rights for the electronic key, it can be used to unlock one or more electronic locks 12a-g.

According to embodiments presented herein, a configuration determiner 1 is used to facilitate user-specific configurations of the restricted physical spaces. Optionally, one or more access points 8 are provided for providing Wi-Fi connectivity for users within or in the vicinity of the building 10.

A server 3 can be provided to manage access rights for electronic keys 2a, 2b, in the environment and may be deployed in a cloud infrastructure. The server 3 communicates with the configuration determiner 1 and optionally other components via a communication network 7, which can be an Internet protocol (IP)-based network, such as a local area network, cellular network, or the Internet. This communication network 7 facilitates communication between the server 3, the configuration determiner 1, and optionally the electronic locks 12a-g, and the electronic keys 2a, 2b.

A first user 5a is located outside the building 10 and carries a first electronic key 2a. A second user 5b is located in her room 16b and carries a second electronic key 2b, which can be of the same or a different type as the first electronic key 2a. A user can be a user that is assigned to a particular restricted space, e.g. a guest that is associated with a particular hotel room. Alternatively, a user can be part of the staff, e.g. a cleaner or maintenance worker of the hotel.

When an electronic key 2a, 2b is detected by an electronic lock 12a-g, the electronic lock evaluates the access rights of the electronic key 2a, 2b to determine whether to grant or deny access. This evaluation can be performed online or offline based on various mechanisms known *per se,* such as shared secrets, cryptographically signed credentials or communication with the server 3. Additionally or alternatively, the locks 12a-g can rely on local or remote whitelists (indicating credentials that should be allowed access) and blacklists (indicating credentials that should not be allowed access) to verify access permissions.

When the first user 5a approaches and enters the building 10, and when the electronic key 2a is embedded in a user device, the user device can be configured to connect to the access point 8. This connection can be based on a previous configuration of the user device. For instance, the user may have signed up for a loyalty program (e.g. hotel loyalty program) associated with the building, such that when the user device configured with the association to the loyalty program approaches the building, the user device connects to the access point 8. Optionally the connection is only configured for when the loyalty program for the user is at least at a certain level or tier.

The configuration determiner 1 is a server or other computer that is configured to dynamically manage the configuration of the restricted physical spaces 16a-g within the building 10 based on user identity. The configuration determiner 1 can determine an identity of a user, e.g. when the electronic key of the user unlocks an electronic lock 12 or when a user device comprising the electronic key connects to the access point 8. This allows the configuration determiner 1 to determine a personalised presence space configuration for the restricted space associated with the user, for when the user is (or is about to be) present in the restricted physical space. These presence space configurations may include settings for lighting, climate control, and/or window coverings within the respective spaces. The configuration determiner 1 sends configuration signals to relevant actuators or systems, to implement the presence space configuration, or to readjust when a user leaves the restricted space to conserve energy. The configuration determiner 1 may interact with a server 3 via a communication network 7 to access assignments of restricted spaces (e.g. rooms) for users, user profiles (optionally including loyalty program membership and level), machine learning models, or other relevant resources.

It should be noted that while Fig. 1 illustrates two users 5a, 5b carrying respective electronic keys 2a, 2b, embodiments presented herein can support any number of users and associated electronic keys.

Fig. 2 illustrates a schematic view of an embodiment of a restricted physical space, such as a room within a building in the environment of Fig 1. The physical space 16 is accessible via a door equipped with an electronic lock 12 that can selectively lock or unlock the door based on communication with an electronic key.

The physical space 16 includes lighting units 30 that, for instance, can be positioned on the ceiling, walls or on tables. The lighting units 30 are configurable to provide different lighting settings based on user preferences or operational requirements, either by switching the lighting units 30 on or off, or by setting the lighting units 30 to a specific dimmer setting. Hence, the configuration determiner 1 may send a configuration signal to adjust the brightness, colour temperature, and/or activation status of the lighting units 30.

Additionally, the physical space 16 can be equipped with one or more window coverings 31, such as motorized blinds and/or curtains, that can be adjusted to control the amount of natural light entering the room. Additionally, adjustment of the window coverings can affect how much heat is absorbed or insulated from the external environment. The adjustment of the window covering 31 may also be actuated via configuration signals sent by the configuration determiner 1, either in response to user preferences or based on external conditions, such as time of day.

A climate control unit 33 can also be provided within the physical space 16. The climate control unit 33 may include a heating, ventilation, and air conditioning (HVAC) device configured to regulate the temperature and airflow in the room. The configuration determiner 1 may control the climate control unit 33, e.g. by providing a target temperature, to activate heating, cooling, or ventilation modes according to user-specific settings or energy-saving protocols.

The physical space 16 illustrated in Fig. 2 demonstrates how multiple environmental elements, such as access control, lighting, window coverings, and climate control, can be dynamically configured to create a personalised environment for a user.

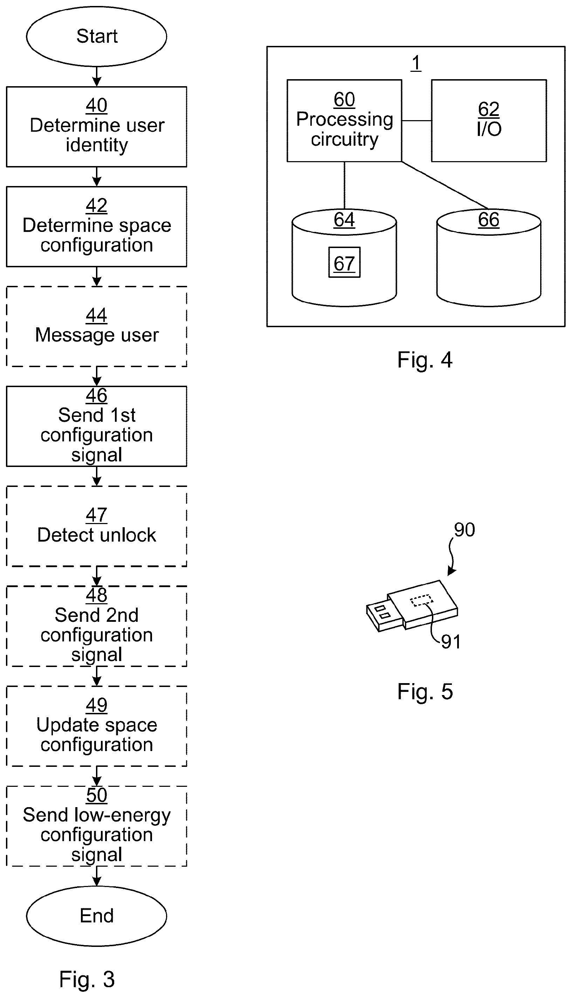

Fig. 3 is a flow chart illustrating embodiments of methods for configuring a restricted physical space (16, 16a-g), the method being performed by a configuration determiner 1.

In a *determine user identity* step 40, the configuration determiner 1 determines an identity of a user 5a, 5b associated with a restricted physical space 16, 16a-g.

In one embodiment, the user identity is identified when the user unlocks the electronic lock to a restricted space. A signal is then sent from the electronic lock to the configuration determiner 1 indicating that a credential has been used to unlock the electronic lock for the restricted space. The configuration determiner 1, the electronic lock, or another entity can then determine the user identity that is associated with the credential. In other words, the determining an identity of the user can comprise determining the identity of the user based on the user unlocking an electronic lock associated with the restricted physical space using a credential of the user.

In one embodiment, the user identity is determined by detecting that the user 5a, 5b has entered a building 10 containing the restricted physical space 16, 16a-g. For instance, the detection of user presence can be achieved by monitoring connections to the local wireless network (e.g., Wi-Fi) provided by the access point 8 in the building 10. In this way, a seamless and unobtrusive method is provided for identifying users without requiring additional manual input from the user.

More specifically, the determining 40 the identity of the user can be based on a user device 2a, 2b of the user 5a, 5b being detected in the building 10 containing the restricted physical space 16, 16a-g, and determining the identity of the user based on an identity of the user device 2a, 2b.

Optionally, the user identity is determined based on communication with a property management system (PMS). The property management system (PMS) is a system that stores and manages data related to the operation of facilities such as hotels, cruise ships, or office buildings. The PMS facilitates the configuration of restricted physical spaces by providing user-specific and operational data, such as data about assignments of users/guests to restricted spaces/rooms, loyalty program status and level, etc., to the configuration determiner 1.

Optionally, the method only proceeds if the loyalty program status indicates that the user has a loyalty program level that is at least a pre-defined loyalty program level.

In a *determine space configuration* step 42, the configuration determiner 1 determines a presence space configuration based on the identity of the user 5a, 5b. This presence space configuration can include user preferences, and can be pre-stored in a database. The presence space configuration is applied for when the user is present, or is going to be present in the near future, in the restricted physical space For instance, the presence space configuration can include settings for preferred room temperature, lighting settings, or window shade positions. For example, a user who prefers a well-lit environment and a temperature of 22°C can have those settings automatically applied upon identification of the user. The presence space configuration can be applicable for all restricted spaces assigned to the user (e.g. a preferred temperature or general lighting setting "bright"), or the presence space configuration can be applicable only for a particular restricted space (e.g. turn on the right bedside light but leave the left bedside light off). By storing these configurations in a central database, the system can ensure consistency across different spaces, allowing the user to move seamlessly between rooms or buildings while retaining their personalized settings.

The presence space configuration (and/or the absence space configuration, see below) can comprise a lighting configuration for the restricted physical space 16, 16a-g. For instance, the lighting configuration may include dimming the lights to create a relaxing atmosphere in the evening or activating bright, focused lighting during working hours. If the user is a cleaner, the lighting configuration can be to turn all lights to maximum brightness to facilitate proper cleaning, or to slightly dimmed lighting for the preference of a particular cleaner (user).

Alternatively or additionally, the presence space configuration (and/or the absence space configuration, see below) comprises a window cover configuration for the restricted physical space 16, 16a-g. For example, motorized blinds or curtains could be adjusted to provide privacy or maximise natural light based on the time of day or the preferences of the user.

Alternatively or additionally, the presence space configuration (and/or the absence space configuration) comprises a climate control configuration for the restricted physical space 16, 16a-g. For example, the climate control system can precondition the room to the user's preferred temperature before they enter, ensuring immediate comfort upon arrival.

Optionally, the presence space configuration is determined also based on time of day and/or day of week. For instance, the user may prefer a different configuration on weekends compared to weekdays, or a different configuration during the day compared to during the night. Optionally, the presence space configuration is determined also based on the number of guests that are associated with the booking. This information can be retrieved from the PMS. For instance, a person may have one presence space configuration that is applied when travelling alone (e.g. on business trips), and another presence space configuration when travelling with a family.

In an optional *message user* step 44, the configuration determiner 1 transmits a message to the user device 2a, 2b, indicating that the restricted physical space 16, 16a-g is being prepared for the user 5a, 5b. The message can result in the user device displaying a notification to the user. As an example scenario, consider that the climate control is triggered to be actuated for the hotel room of a user, based on the user entering the building. It would then be of great value for the user to be made aware of the climate preparation of the hotel room. This makes the user feel welcome and appreciated. Additionally, the notification could provide useful information, such as the estimated time for the room to reach the desired temperature or updates on other configurations being applied, further enhancing user satisfaction.

In a *send 1st configuration signal* step 46, the configuration determiner 1 sends a first configuration signal to actuate at least part of the presence space configuration in the restricted physical space 16, 16a-g. The configuration signal causes, at least part of, the presence space configuration to be applied, e.g. by adjusting the temperature setting, by adjusting the lighting, or by causing a motor to adjust window coverings. In one embodiment, the first configuration signal causes the entire presence space configuration to be applied, e.g. when the user identity is determined based on the user presenting the credential for entering the room. In one embodiment, the first configuration signal causes only a strict subset of the presence space configuration to be applied, e.g. causing only the climate control configuration to be activated for the restricted physical space 16, 16a-g. This can be applicable when also a second configuration signal is sent at a later stage. This allows for staggered or prioritized activation of configurations, ensuring that the settings that take longer to be effective, such as climate control, are applied first, while (more or less) instant settings, such as lighting, are applied when the credential is presented to unlock the restricted space.

The first configuration signal can optionally cause a lift to move to the entrance floor of the building 10. Again, this makes the user feel welcome and appreciated. By ensuring that a lift is readily available when the user enters the building, the system minimizes wait times and provides a smooth, efficient experience, particularly in multi-story buildings.

In an optional *detect unlock* step 47, the configuration determiner 1 detects 47, after determining the identity of the user 5a, 5b, that the restricted physical space 16, 16a-g is unlocked by the user 5a, 5b. The detection of the unlocking provides a trigger for further actions, ensuring that subsequent configurations are only applied once the user is about to access the space, enhancing security and accuracy. It is to be noted that, especially when this step is not performed, in the *determine user identity* step 40, the user identity can be determined based on a credential being presented to the restricted physical space for unlocking.

In an optional *send 2nd configuration signal* step 48, the configuration determiner 1 sends, based on detecting that the restricted physical space 16, 16a-g is unlocked by the user 5a, 5b, a second configuration signal to actuate the lighting configuration and/or the window cover configuration. For instance, the lights can be turned on to a warm, welcoming setting as the user enters, and blinds can be adjusted to balance privacy with natural light, creating a desirable environment for the user.

In an optional *update space configuration* step 49, the configuration determiner 1 updates the presence space configuration for the user 5a, 5b based on manual adjustments made to the configuration of the restricted physical space 16, 16a-g. Manual adjustments can be, for instance, changing temperature settings, dimming or toggling lights, or changing window covering settings. For example, if the user adjusts the room temperature to 20°C, this adjustment can be signalled to the configuration determiner 1 and the presence space configuration is updated for the user such that the preferred temperature is set to 20°C. Optionally, the updating of the presence space configuration comprises training a machine-learning model for the presence space configuration. For example, if the user consistently adjusts the ceiling light to be between 20% and 40% dimming, during the evening, but between 60% and 80% dimming during daylight hours, the machine-learning model can be trained such that the ceiling light setting of the presence space configuration reflects this preference. In this example, the training data for the machine-learning model is in the form of lighting settings and time. In this case, the determine space configuration 42 step comprises determining the presence space configuration also based on time.

Optionally, machine learning can be used to obtain a general base configuration for a restricted physical space. The general base configuration can then be applied for a user for which a specific user configuration has not yet been determined. For example, the general base configuration can be based on the previous n number of user settings, optionally also based on time of day, weather and time of the year, that can reflect how much sun, heat and cold comes into the space. Optionally, the users are clustered when they are similar in their configurations. In this way, when a user is in a new space that has previously been configured by other users in the cluster, the configuration can be set in accordance with these other users in the cluster.

Machine learning models can optionally also be used to estimate how long it takes users to arrive at the lift, to be able to predict when the lift should be there waiting to be used.

In an optional *send low-energy configuration signal* step 50, the configuration determiner 1 sends, based on detecting that the user 5a, 5b is leaving/has left the restricted physical space 16, 16a-g, a low-energy configuration signal to actuate an absence space configuration in the restricted physical space. The detecting that the user has left the restricted physical space can be determined based on the location of the user device of the user or by detecting that the electronic lock for the restricted space is locked from the outside. In one embodiment, the detecting that the user has left the restricted physical space is based on detecting a use of the credential (used to unlock the electronic lock associated with the restricted physical space) in another location than the electronic lock that is associated with the restricted physical space. For instance, in a hotel environment, when a cleaner uses their credential to open a new room (new restricted physical space), this is an indication that the cleaner has left the preceding room, and the absence space configuration can be applied for the preceding room. Similarly if a hotel guest used their room key for accessing a gym, spa, conference room or lounge space elsewhere in the hotel, this indicates that the hotel guest has left the room, and the absence space configuration can be applied. Alternatively or additionally, the detecting that the user has left the restricted physical space can be based on detecting that a keycard has been removed from a keycard holder of a hotel room.

The low-energy configuration signal and resulting absence space configuration result in lower energy use for the restricted physical space 16, 16a-g than the presence space configuration. For instance, the low-energy configuration signal can cause less climatization being applied (e.g., less or no active cooling or active heating). Alternatively or additionally, the low-energy configuration signal can cause all (or most) lights being switched off. Alternatively or additionally, the low-energy configuration signal can cause window covering(s) being set to maximum blocking to reduce how much the climate in the restricted space is affected by the climate outside (e.g., less sun, more thermal insulation, etc). These energy-saving measures reduce operating costs while ensuring that the space is still preserved in a secure and energy-efficient state until the next user interaction.

Fig 4 is a schematic diagram illustrating components of the configuration determiner 1 of Fig 1. Processing circuitry 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in memory circuitry 64, which can thus be a computer program product. The processing circuitry 60 could alternatively be implemented using an application specific integrated circuit (ASIC), field programmable gate array (FPGA), etc. The processing circuitry 60 can be configured to execute the method described with reference to Fig 3 above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

An I/O interface 62 is provided for communicating with external and/or internal entities using wired communication, e.g. based on Ethernet, and/or wireless communication, e.g. Wi-Fi, Bluetooth, Bluetooth Low Energy, and/or a cellular network.

Other components of the configuration determiner 1 are omitted in order not to obscure the concepts presented herein.

Fig 5 shows one example of a computer program product 90 comprising computer readable means. On this computer readable means, a computer program 91 can be stored in a non-transitory memory. The computer program can cause processing circuitry to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 4. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

Here now follows a list of enumerated embodiments.
1. A method for configuring a restricted physical space (16, 16a-g), the method being performed by a configuration determiner (1), the method comprising:
   determining (40) an identity of a user (5a, 5b) associated with a restricted physical space (16, 16a-g);
   determining (42) a presence space configuration based on the identity of the user (5a, 5b); and
   sending (46) a first configuration signal to actuate at least part of the presence space configuration in the restricted physical space (16, 16a-g).
2. The method according to embodiment 1, further comprising:
   sending (50), based on detecting the user (5a, 5b) leaving the restricted physical space (16, 16a-g), a low-energy configuration signal to actuate an absence space configuration in the restricted physical space that results in lower energy use for the restricted physical space (16, 16a-g) than the space configuration.
3. The method according to embodiment 1 or 2, wherein at least one of the presence space configuration and the absence space configuration comprises a lighting configuration for the restricted physical space (16, 16a-g).
4. The method according to any one of the preceding embodiments, wherein at least one of the presence space configuration and the absence space configuration comprises a window cover configuration for the restricted physical space (16, 16a-g).
5. The method according to any one of the preceding embodiments, wherein at least one of the presence space configuration and the absence space configuration comprises a climate control configuration for the restricted physical space (16, 16a-g).
6. The method according to embodiment 5 when depending on embodiment 3 and/or 4, wherein the first configuration signal causes the climate control configuration to be activated for the restricted physical space (16, 16a-g), and wherein the method further comprises:
   detecting (47), after the determining the identity of the user (5a, 5b), that the restricted physical space (16, 16a-g) is unlocked by the user (5a, 5b); and
   sending (48), based on detecting that the restricted physical space (16, 16a-g) is unlocked by the user (5a, 5b), a second configuration signal to actuate the lighting configuration and/or the window cover configuration.
7. The method according to embodiment 6, wherein the determining an identity of the user (5a, 5b) comprises determining that the user (5a, 5b) has entered a building (10) containing the restricted physical space (16, 16a-g).
8. The method according to embodiment 7, wherein the first configuration signal causes a lift to move to the entrance floor of the building (10).
9. The method according to any one of the preceding embodiments, further comprising:
   updating (49) the presence space configuration for the user (5a, 5b) based on manual adjustments made to a configuration of the restricted physical space (16, 16a-g).
10. The method according to embodiment 9, wherein the updating (49) the presence space configuration comprises training a machine-learning model for the presence space configuration.
11. The method according to any one of the preceding embodiments, wherein the determining (40) the identity of the user is based on a user device (2a, 2b) of the user (5a, 5b) being detected in the building (10) containing the restricted physical space (16, 16a-g), and determining the identity of the user based on an identity of the user device (2a, 2b).
12. The method according to embodiment 11, when dependent on embodiment 6, further comprising:
   transmitting (44) a message to the user device (2a, 2b), indicating that the restricted physical space (16, 16a-g) is being prepared for the user (5a, 5b).
13. A configuration determiner (1) for configuring a restricted physical space (16, 16a-g), the configuration determiner (1) comprising:
   processing circuitry (60); and
   memory circuitry (64) storing instructions (67) that, when executed by the processing circuitry, cause the configuration determiner (1) to:
      determine an identity of a user (5a, 5b) associated with a restricted physical space (16, 16a-g);
      determine a presence space configuration based on the identity of the user (5a, 5b); and
      send a first configuration signal to actuate at least part of the presence space configuration in the restricted physical space (16, 16a-g).
14. A computer program (67, 91) for configuring a restricted physical space (16, 16a-g), the computer program comprising computer program code which, when executed on a configuration determiner (1), causes the configuration determiner (1) to:
   determine an identity of a user (5a, 5b) associated with a restricted physical space (16, 16a-g);
   determine a presence space configuration based on the identity of the user (5a, 5b); and
   send a first configuration signal to actuate at least part of the presence space configuration in the restricted physical space (16, 16a-g).
15. A computer program product (64, 90) comprising a computer program according to embodiment 14 and a computer readable means comprising non-transitory memory in which the computer program is stored.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for configuring a restricted physical space (16, 16a-g), the method being performed by a configuration determiner (1), the method comprising:
determining (40) an identity of a user (5a, 5b) associated with a restricted physical space (16, 16a-g);
determining (42) a presence space configuration based on the identity of the user (5a, 5b); and
sending (46) a first configuration signal to actuate at least part of the presence space configuration in the restricted physical space (16, 16a-g).

2. The method according to claim 1, wherein the determining (40) an identity of the user comprises determining the identity of the user based on the user unlocking an electronic lock associated with the restricted physical space using a credential of the user.

3. The method according to claim 1 or 2, further comprising:
sending (50), based on detecting that the user (5a, 5b) has left the restricted physical space (16, 16a-g), a low-energy configuration signal to actuate an absence space configuration in the restricted physical space that results in lower energy use for the restricted physical space (16, 16a-g) than the space configuration.

4. The method according to claim 3 when dependent on claim 2, wherein the detecting that the user has left the restricted physical space is based on detecting a use of the credential in another location than the electronic lock associated with the restricted physical space.

5. The method according to any one of the preceding claims, wherein at least one of the presence space configuration and the absence space configuration comprises a lighting configuration for the restricted physical space (16, 16a-g).

6. The method according to any one of the preceding claims, wherein at least one of the presence space configuration and the absence space configuration comprises a window cover configuration for the restricted physical space (16, 16a-g).

7. The method according to any one of the preceding claims, wherein at least one of the presence space configuration and the absence space configuration comprises a climate control configuration for the restricted physical space (16, 16a-g).

8. The method according to claim 7 when depending on at least one of claim 5 and 6, wherein the first configuration signal causes the climate control configuration to be activated for the restricted physical space (16, 16a-g), and wherein the method further comprises:
detecting (47), after the determining the identity of the user (5a, 5b), that the restricted physical space (16, 16a-g) is unlocked by the user (5a, 5b); and
sending (48), based on detecting that the restricted physical space (16, 16a-g) is unlocked by the user (5a, 5b), a second configuration signal to actuate at least one of the lighting configuration and the window cover configuration.

9. The method according to claim 8, wherein the determining an identity of the user (5a, 5b) comprises determining that the user (5a, 5b) has entered a building (10) containing the restricted physical space (16, 16a-g).

10. The method according to claim 9, wherein the first configuration signal causes a lift to move to the entrance floor of the building (10).

11. The method according to any one of the preceding claims, further comprising:
updating (49) the presence space configuration for the user (5a, 5b) based on manual adjustments made to a configuration of the restricted physical space (16, 16a-g).

12. The method according to claim 11, wherein the updating (49) the presence space configuration comprises training a machine-learning model for the presence space configuration.

13. A configuration determiner (1) for configuring a restricted physical space (16, 16a-g), the configuration determiner (1) comprising:
processing circuitry (60); and
memory circuitry (64) storing instructions (67) that, when executed by the processing circuitry, cause the configuration determiner (1) to:
determine an identity of a user (5a, 5b) associated with a restricted physical space (16, 16a-g);
determine a presence space configuration based on the identity of the user (5a, 5b); and
send a first configuration signal to actuate at least part of the presence space configuration in the restricted physical space (16, 16a-g).

14. A computer program (67, 91) for configuring a restricted physical space (16, 16a-g), the computer program comprising computer program code which, when executed on a configuration determiner (1), causes the configuration determiner (1) to:
determine an identity of a user (5a, 5b) associated with a restricted physical space (16, 16a-g);
determine a presence space configuration based on the identity of the user (5a, 5b); and
send a first configuration signal to actuate at least part of the presence space configuration in the restricted physical space (16, 16a-g).

15. A computer program product (64, 90) comprising a computer program according to claim 14 and a computer readable means comprising non-transitory memory in which the computer program is stored.
